# EUROPEAN PATENT APPLICATION

(11) **EP 2 333 021 A1**
(43) Date of publication of application: **15.06.2011**
(21) Application number: 09178975.0
(22) Date of filing: 11.12.2009
(51) Int. Cl.: C09D 4/00, C09D 5/00, C09D 5/08

(54) **Method for corrosion protection of metal surfaces**

(71) Applicant: ATOTECH Deutschland GmbH, 10553 Berlin (DE)
(72) Inventor: Hofmann, Udo, 64319, Pfungstadt (DE); Donsbach, Hermann, 65468, Trebur (DE); Unger, Jörg, 65468, Trebur (DE)
(74) Representative: Wonnemann, Jörg

(57) **Abstract**

The present invention discloses a method for corrosion protection of a substrate having a metal surface. The method comprises the steps of (i) contacting the substrate with a primer solution containing a coupling agent and (ii) contacting the substrate with a solution comprising a particulate metal and a binder matrix.

## Description

### Field of the invention

The present invention relates to a method for providing corrosion protection to a metal surface.

### Background of the invention

Methods to provide corrosion protection to a metal surface by applying a coating comprising a particulate metal are known in the art. The metal surface to be coated must be pre-treated in order to ensure a good adhesion of the particulate metal containing coating layer on the metal surface.

A metal surface, more specific a steel surface is pre-treated prior to application of the particulate metal containing coating layer with a cleaning composition to remove foreign matter (rust, scale, grease and the like) from the substrate surface. The cleaning can be supported by treatment with ultrasonics, scrubbing or blasting. Conventional cleaners comprise acidic solutions, e.g., diluted hydrochloric acid for removal of rust and scale of steel surfaces, neutral cleaners composed of tensides and alkaline cleaners. Said alkaline cleaners contain usually an alkaline hydroxide and a builder which is selected from alkali metal carbonates, phosphates, silicates and borates.

The above mentioned cleaners for steel surfaces remove all kind of foreign matter and leave a blank metallic surface which is required for further coating of said surface. On the other hand, alkaline cleaners comprising a builder can leave residues of silicate, phosphate or carbonate on the metal surface after rinsing. This residues are no continuous films but islands of residues. A steel surface cleaned in such a way causes an insufficient adhesion of a coating applied in a successive process step.

In the next step the particulate metal containing coating material is applied in one or more steps on the such cleaned steel surface followed by a curing step (see for example US 5,868,819).

The adhesion between a particulate metal containing coating and a metal surface cleaned in a way as described above is not sufficient enough and therefore also the corrosion protection of the metal surface is not satisfactory.

### Object of the invention

Therefore, it is the object of the present invention to provide a method for corrosion protection of metal surfaces, which provides an enhanced corrosion protection by an improved adhesion between the particulate metal containing coating and the metal surface of the substrate.

### Summary of the Invention

This object is achieved by a method comprising the steps of (i) application of a primer solution comprising at least one coupling agent selected from the group consisting of monomeric silanes, oligomeric silanes and mixtures thereof and (ii) applying a coating comprising a particulate metal and a binder matrix. The adhesion between a particulate metal containing coating and a metal surface is increased by applying a primer layer to said metal surface prior to the deposition of the particulate metal containing solution. The primer layer shows an enhanced adhesion both to the metal surface as well as to the particulate metal containing coating. The result is a better corrosion protection for the treated metal surface.

### Detailed description of the invention

The method for corrosion protection of metal surfaces described herein comprises the steps of
( i) contacting the metal surface with a primer solution comprising
   - at least one coupling agent selected from the group consisting of monomeric silanes, oligomeric silanes and mixtures thereof and with the provisio that it is free of a particulate metal
   and thereafter
( ii) contacting said metal surface with a solution comprising
   - at least one particulate metal and
   - a binder matrix.

The primer solution used in step (i) comprises at least one monomeric or oligomeric silane. The at least one monomeric silane is selected from compounds according to formula (1)

R₄₋ₐSi(OR¹)ₐ (1)

wherein R is selected from substituted or unsubstituted C₁-C₈ alkyl group, a is 1, 2 or 3 and R¹ is representing hydrogen or a C₁-C₈ alkyl group. More preferred R¹ is selected from the group consisting of hydrogen and C₁-C₄ alkyl.

The preferred monomeric silane is selected from compounds according to formula (2)

A-(CH₂)ₑ-O-(CH₂)_{f}-SiR²₃-_{X}(OR¹)_{X} (2)

wherein A is the residue 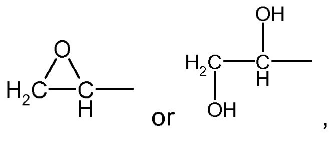 wherein e is an integer and ranges from 1 to 6, f is an integer and ranges from 0 to 6 and wherein R¹ is representing hydrogen or a C₁-C₈ alkyl group, R² is selected from substituted or unsubstituted C₁-C₈ alkyl group and x is 1, 2 or 3.

The most preferred coupling agents according to formula (2) are those with R¹= hydrogen, methyl or ethyl and x = 3, e is an integer from 1 to 3 and f is an integer from 1 to 3.

The at least one silane can be used in the primer solution as a monomeric molecule according to formula (1) and more preferred formula (2) or it can be used as an oligomeric silane after modification by hydrolysis and condensation of monomeric silanes according to formula (1) and more preferred formula (2) prior to use in the primer solution. The resulting preferred oligomeric silanes derived from monomeric silanes according to formula (2) by hydrolysis and condensation are described by formula (3) 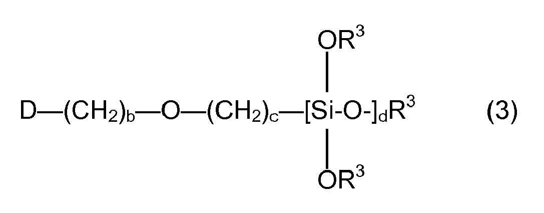 wherein D is the residue 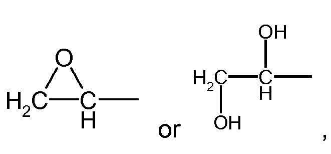 wherein b is an integer from 1 to 6, c is an integer from 0 to 6 and wherein R³ is selected from hydrogen and C₁-C₈ alkyl and wherein d is an integer 2 to 20. More preferred d is an integer from 2 to 10 and R³ is selected from the group consisting of hydrogen, methyl and ethyl.

The most preferred monomeric silanes for the syntheses of oligomeric silanes according to formula (3) are selected from the group consisting of compounds according to formula (2) wherein R¹ is hydrogen, methyl or ethyl, x = 3, e is an integer from 1 to 3 and f is an integer from 0 to 3.

The hydrolysis and condensation of monomeric silanes is well known in the art. For example, a monomeric silane is reacted with an acidic catalyst, e.g., acetic acid or diluted hydrochloric acid leading to a clear solution of oligomeric silanes.

The solution of oligomeric silane molecules is then used as a feedstock for primer solution.

The at least one monomeric or oligomeric silane is present in the primer solution in amounts of 1 g/l to 25 g/l, more preferred 2.5 g/l to 10 g/l.

The primer solution optionally further contains at least one silicon-containing composition which is selected from colloidal silica or an alkali metal silicate and mixtures thereof. Such compositions are constituted of colloids and/or nanoparticles of silica and/or alkali metal silicates.

The at least one optional silicon-containing composition is added to the primer solution in an amount of 1.5 g/l to 50 g/l, more preferred 3 g/l to 16 g/l (calculated on solid basis).

Colloidal silica in the form of sols or gels, in particular sols, is commercially available, for example Ludox® or Levasil®. Colloidal silicic acids are silicic acid salts, preferably lithium salts, known as "lithium polysilicate". The Si0₂/Li₂0 mole ratio in these colloidal silicic acid lithium salts ranges from 4.5 to 5.5, preferably from 4.8 to 5.2.

The particulate silicon-containing composition can be used to adjust the pH of the primer solution to achieve the desired pH by mixing. The use of lithium polysilicate or other anionic polysilicates, sols or gels, for example, results in an alkaline pH in the range from 9 to 11 whereas using colloidal cationic SiO₂ produces an acidic pH. Mixing lithium polysilicate or other anionic polysilicates, sols or gels and colloidal cationic silica gel can produce any desired intermediate pH values of the primer solution.

A metal or metal alloy surface, e.g., a steel surface is first cleaned with procedures known in the art which may include complete degreasing and removal of other residues leaving a pure metal surface. Next, said substrate is contacted with the primer solution in step (i) by known methods such as dipping, dip-spin coating, spraying or other centrifugal applications.

In a preferred embodiment of the present invention the as coated substrate is dried after application of the primer solution. Drying is performed at a temperature in a range of 20°C to 200°C, more preferred in a range of 50°C to 160°C for 10 s to 150 min, more preferred 20 s to 50 min. If induction heating is utilized for drying the coated substrate, drying at the desired temperature is performed for 10 s to 180 s, more preferred 20 s to 120 s.

The resulting layer thickness of the deposit derived from the primer solution ranges from about 0.01 µm to about 0.2 µm. Such a low coating thickness is required in order to enable an electrical contact of the metallic substrate surface and the particulate metal containing coating applied in step (ii). Otherwise the particulate metal containing coating can not function as a cathodic corrosion protection for the metallic substrate surface.

Next, the substrate having a metal surface is contacted with a solution comprising a particulate metal and a binder matrix in step (ii), optionally after drying of the substrate.

The solution used in step (ii) contains at least one type of particulate metal which is selected from the group consisting of zinc, aluminum, magnesium, mixtures and alloys thereof, and a binder matrix. The particulate metal has preferably the shape of flakes, powders and mixtures thereof. More preferably the particulate metal has the shape of flakes. The metallic flakes usable in the solution applied in step (ii) typically have a size of 1 µm to 70 µm, more preferred 2 µm to 50 µm. The metallic powders typically have a size of 2 µm to 5 µm, more preferred 2 to 3 µm. Flakes might be blended with metal powder, but preferably only with minor amounts of powder.

The solution applied in step (ii) contains 200 g/l to 1100 g/l of particulate metal, more preferred 300 g/l to 800 g/l.

A binder matrix is mandatory in the solution applied in step (ii). Such a binder matrix can be an organic, an inorganic or a hybrid binding matrix consisting of organic and inorganic components. An example of a pure inorganic binder matrix is an aqueous solution of an alkali metal silicate characterized by formula (4)

gM₂O. SiO₂ fH₂O (4)

wherein g ranges from 1 to 4, preferably from 1 to 3, f ranges from 0 to 9 and M is selected from the group consisting of Li⁺, Na⁺, K⁺ and NH₄⁺. The concentration of the alkali metal silicate according to formula (4) in the solution applied in step (ii) ranges from 10 g/l to 400 g/l, more preferred from 50 g/l to 200 g/l.

Another suitable binder matrix consists of at least one monomeric silane according to formula (1), more preferred a monomeric silane according to formula (2) or an oligomeric silane according to formula (3). The concentration of a silane as the binder matrix in the solution applied in step (ii) ranges from 10 g/l to 400 g/l, more preferred from 50 g/l to 200 g/l.

The most preferred compounds according to formula (2) as binder matrix in the solution applied in step (ii) are those wherein R¹ is selected from hydrogen, methyl and ethyl, x = 3, e is an integer from 1 to 3 and f is an integer from 1 to 3.

In another embodiment of the present invention, metal alkoxides having the general formula (5) are utilized as the binder matrix in the solution applied in step (ii)

M²(OR⁴)ₙ (5)

wherein M² is selected from the group consisting of Al, Si, Ti and Zr, R⁴ is a C₁-C₈ alkyl group and n represents the oxidation state of M². More preferred metal alkoxides according to formula (5) are those with R⁴ = C₁-C₄ alkyl. The concentration of a compound according to formula (5) in the binder matrix in the solution applied in step (ii) ranges from 10 g/l to 400 g/l, more preferred 50 g/l to 200 g/l.

In still another embodiment of the present invention organic binder matrices which consist of epoxy resins are used as the binding matrix in the solution applied in step (ii). The concentration of an epoxy resin in the binding matrix ranges from 50 g/l to 500 g/l, more preferred 150 g/l to 350 g/l.

In still another embodiment of the present invention mixtures of two or more binder matrices from the group consisting of compounds according to formulae (1), (2), (3), (4) and (5) and epoxy resins are used as the binder matrix in the solution applied in step (ii).

The solution applied in step (ii) may further contain an organic solvent having a boiling point higher than 100°C at atmospheric pressure. Such solvents are preferably glycols such as tri- and tetraethylene glycol, di- and tripropylene glycol, the monomethyl, dimethyl, ethyl ethers of these glycols, as well as diacetone alcohol, the low molecular weight ethers of diethylene glycol and mixtures of the foregoing. The organic solvent will be present in an amount from 1 wt.-% to 30 wt.-%, more preferred from 15 wt.-% to 25 wt.-%.

The solution applied in step (ii) may further contain a thickener. Suitable thickeners are selected from the group comprising water-soluble cellulose ethers. Suitable thickeners include the ethers of hydroxyethylcellulose, methylcellulose, methyl-hydroxypropylcellulose, ethylhydroxyethylcellulose, methylethylcellulose and mixtures thereof. The concentration of the thickener ranges from 0.05 wt.-% to 2 wt.-%.

The solution applied in step (ii) may further contain a wetting agent.

In a preferred embodiment of the present invention the same monomeric or oligomeric silane is utilized in the primer solution and the solution applied in step (ii) as the coupling agent and binder matrix, respectively.

The solution applied in step (ii) can be applied to the substrate by methods known in the art such as dipping, spraying, or centrifugal applications like dip-spin coating.

Afterwards, the as coated substrate is dried. Drying is performed at temperatures in the range of 20°C to 400°C, more preferred 200 °C to 300°C for 10 s to 150 min, more preferred from 20 s to 50 min. If induction heating is utilized for drying the coated substrate is dried at the desired temperature for 10 s to 180 s, more preferred 20 s to 120 s.

In one embodiment of the present invention the substrate is contacted for a second time with the solution applied in (ii) after drying the first layer of the coating obtained by first contacting with the solution applied in step (ii) to increase the final coating thickness of the particulate metal containing coating and therewith the corrosion protection.

In still another embodiment of the present invention a top coat layer is applied on top of the coating derived from contacting the substrate with the solution applied in step (ii) and successive drying. Such a top coat layer can have a similar composition as the primer solution and can be further modified with lubricants. Other types of top coat layers are based on organic polymers or monomers thereof. Said optional sealer layer provides an even higher corrosion protection of the substrate having a metal surface and furthermore provides an enhanced adhesion for paints applied as the final coating to said metal substrate. The curing temperature for the top coat layer ranges from 60°C to 140°C, more preferred 80°C to 120 °C and the curing time ranges from 10 s to 30 min, more preferred 20 s to 16 min. If induction heating is utilized for drying the coated substrate is dried at the desired temperature for 10 s to 180 s, more preferred 20 s to 120 s.

### Examples

The invention will now be illustrated by reference to the following non-limiting examples.

### a. Preparation of an oligomeric silane according to formula (3):

A silane according to formula (2) wherein R¹ is methyl and x = 3 is mixed with formic acid and water. The silane solution is then stirred at elevated temperature leading to an oligomeric silane according to formula (3).

### b. Preparation of the primer solution:

20 g of the solution of oligomeric silanes according to formula (3) obtained in a. are diluted with water. The derived solution is a stable concentrate of the primer solution which can be further diluted with water for use.

### c. Preparation of the substrates prior to step (i):

Fasteners made of a low carbon steel are decreased first by immersion in an alkaline cleaning solution, rinsed with water and dried. Then, the fasteners are shot-blasted, rinsed again with water and dried.

### d. Preparation of the solution applied in step (ii):

A particulate metal, the oligomeric silane obtained in step a. and a high boiling organic solvent are mixed to yield the solution applied in step (ii).

### Comparative Example

### Application of coating

Fasteners are cleaned as described in c. and then coated two times only with the solution applied in step (ii) obtained in step d. by dip-spin application and then immediately dried at 120 °C for 10 min and baked at 290 °C for 40 min. The coated fasteners are finally dipped into a commercially available top coat formulation (ZINTEK®TOP, a product of Atotech Deutschland GmbH) and dried at 100 °C for 10min.

### Example 1

Fasteners are cleaned as described in c. After cleaning the fasteners are dipped into the primer solution prepared according to step b. and dried at 100 °C for 10 min.

Then the primer coated fasteners are coated two times with the solution applied in step (ii) as described for the comparative example and a top coat layer is deposited and dried as described for the comparative example.

### Results

The corrosion resistance of the coated fasteners derived from the comparative example and example 1 is tested with a neutral salt spray test according to ISO 9227:2006.

The adhesion of the whole stack of coatings on the fasteners is tested with a bending test (conical mandrel) according to ISO 6860:2006.

The respective results are summarized in Table 1:

| | Comparative Example | Example 1 |
|---|---|---|
| Film thickness of particulate metal containing coating | 8-10 | 8-10 |
| Corrosion resistance according to ISO 9227:2006 | 900-1100 h | 1700-1900 h |
| Adhesion test according to ISO 6860:2006 (crack length) | 15-20 mm | 2-5 mm |

The additional primer coating between the particulate metal containing coating and the fastener surface in Example 1 leads to an increased resistance to corrosion of the fasteners as shown by neutral salt spray tests (Table 1). The adhesion between the particulate metal containing coating and the fastener surface is increased when a primer solution is deposited first. In particular, crack lengths (corresponding to adhesion; the shorter the crack length, the better the adhesion) of 2-5 mm after bending according to ISO 6860:2006 are observed in case of example 1 whereas crack lengths of 15-20 mm are observed in the comparative experiment.

The corrosion resistance according to ISO 9227:2006 is increased from 900-1100 h for fasteners coated only with a particulate metal containing coating and a top coat (Comparative Example) to 1700-1900 h in case of fasteners coated with a primer coating, a particulate metal containing coating and a top coat (Example 1).

## Claims

1. Method for corrosion protection of metal surfaces comprising the steps of
(i) contacting the metal surface with a primer solution comprising at least one coupling agent selected from the group consisting of monomeric silanes, oligomeric silanes and mixtures thereof and with the provisio that the primer solution is free of a particulate metal
and thereafter
(ii) contacting said metal surface with a solution comprising at least one particulate metal and a binder matrix.

2. Method according to claim 1, wherein the at least one coupling agent in the primer solution according to claim 1 (i) is selected from monomeric silanes having the general formula (1)
R₄₋ₐSi(OR¹)ₐ (1)
wherein R is selected from substituted or unsubstituted C₁-C₈ alkyl group, a is 1, 2 or 3 and R¹ is selected from hydrogen and C₁-C₈ alkyl group
and oligomeric silanes having the general formula (3) 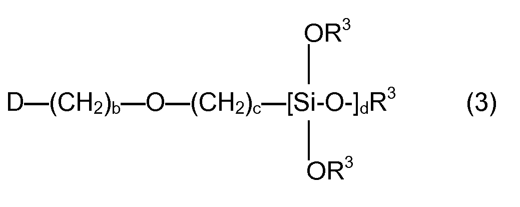 wherein D is the residue 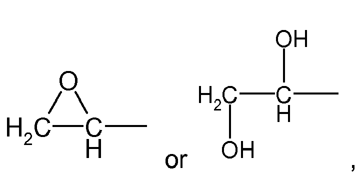 wherein b is an integer from 1 to 6, c is 0 or an integer from 1 to 6, wherein R³ is selected from hydrogen and C₁-C₈ alkyl group and wherein d is an integer from 2 to 20.

3. Method according to claim 2 wherein the coupling agent in the primer solution according to claim 1 (i) is selected from compounds according to formula (2)
A-(CH₂)ₑ-O-(CH₂)_{f}-SiR²_{3-X}(OR¹)_{X} (2)
wherein A is the residue 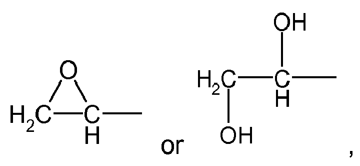 wherein e is an integer from 1 to 6, f is 0 or an integer from 1 to 6 and wherein R¹ is selected from hydrogen and C₁-C₈ alkyl group and R² is selected from substituted or unsubstituted C₁-C₈ alkyl group and x is 1, 2 or 3.

4. Method according to claim 3 wherein the coupling agent in the primer solution according to claim 1 (i) is selected from monomeric silanes according to formula (2) wherein R¹ is selected from hydrogen, methyl and ethyl, x = 3, e is an integer from 1 to 3 and f is an integer from 1 to 3.

5. Method according to any of claims 1 to 2 wherein the coupling agent in the primer solution according to claim 1 (i) is selected from compounds according to formula (3) wherein R³ is selected from hydrogen, methyl and ethyl, b is an integer from 1 to 3, c is an integer from 0 to 3 and d is an integer from 2 to 10.

6. Method according to any of the foregoing claims wherein the primer solution according to claim 1 (i) further comprises at least one silicon-containing composition selected from colloidal silica, alkali metal silicates and mixtures thereof.

7. Method according to any of the foregoing claims wherein the particulate metal in the solution according to claim 1 (ii) is selected from the group consisting of zinc, aluminum, magnesium, alloys thereof and mixtures thereof.

8. Method according to any of the foregoing claims wherein the binder matrix in the solution according to claim 1 (ii) is selected from the group consisting of
alkali metal silicates **characterized by** formula (4)
gM₂O . SiO₂ . hH₂O (4)
wherein g ranges from 1 to 4, preferably from 1 to 3, h ranges from 0 to 9 and M is selected from the group consisting of Li⁺, Na⁺, K⁺ and NH₄⁺,
silanes having the general formula (1)
R₄-aSi(OR¹)a (1)
wherein R is equal or different of each other and selected from substituted or unsubstituted alkyl group with 1 to 8 carbon atoms, a is 1, 2 or 3 and R¹ is a C₁-C₈ alkyl group,
oligomeric silanes having the general formula (3) 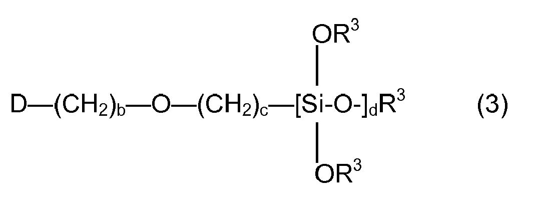 wherein D is the residue 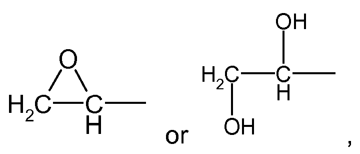 wherein b is an integer from 1 to 6, c is 0 or a whole number from 1 to 6 and wherein R³ is selected from hydrogen and a C₁-C₈ alkyl group, wherein d is an integer from 2 to 20,
metal alkoxides having the general formula (5)
M²(OR⁴)ₙ (5)
wherein M² is selected from the group consisting of Al, Si, Ti and Zr, R⁴ is a C₁-C₈ alkyl group and n represents the oxidation state of M²,
epoxy resins and mixtures thereof.

9. Method according to claim 7 wherein the binder matrix in the solution according to claim 1 (ii) is selected from silanes having the general formula (2).

10. Method according to claim 9 wherein the coupling agent in the solution according to claim 1 (ii) is selected from monomeric silanes according to formula (2) wherein R¹ is selected from hydrogen, methyl and ethyl, x = 3, e is an integer from 1 to 3 and f is an integer from 1 to 3.

11. Method according to any of the foregoing claims wherein the coupling agent in the primer solution according to claim 1 (i) and the binding matrix in the solution according to claim 1 (ii) are the same.

12. The method according to any of the foregoing claims wherein the substrate is dried between steps (i) and (ii).

13. The method according to any of the foregoing claims wherein a top-coat is deposited onto the coating derived in step (ii).
